# EUROPEAN PATENT SPECIFICATION

(11) **EP 3 091 842 B1**
(45) Date of publication and mention of the grant of the patent: **13.03.2019**
(21) Application number: 15701582.7
(22) Date of filing: 05.01.2015
(51) Int. Cl.: A23G 1/00, A23G 1/30, A23G 1/54

(54) **TEMPERATURE TOLERANT CHOCOLATE**
TEMPERATURTOLERANTE SCHOKOLADE
CHOCOLAT TOLÉRANT À LA TEMPÉRATURE

(30) Priority: 06.01.2014 GB 201400154
(43) Date of publication of application: 16.11.2016
(73) Proprietor: Kraft Foods R & D, Inc., Deerfield, IL 60015 (US)
(72) Inventor: FOUNTAIN, Gerald Olean, Wilmette, Illinois 60091 (US); PENNER, Amy L, Oxfordshire OX2 6AQ (GB)
(74) Representative: Bailey, Jennifer Ann
(86) International application number: PCT/IB2015/050069
(87) International publication number: WO 2015/101955

(56) References cited:
- EP-A1- 2 601 845
- WO-A1-2012/146920
- WO-A2-2009/068999
- GB-A- 757 110
- US-A1- 2010 323 067
- US-A1- 2012 237 665

## Description

The present invention is defined by the claims and relates to a process for producing a temperature tolerant chocolate composition. The pleasurable organoleptic properties of conventional chocolate are, to a significant extent, due to the fact that the fat (primarily cocoa butter) which forms the continuous phase in chocolate melts quickly and smoothly in the mouth giving a characteristic mouthfeel. This is because cocoa butter softens at approximately 28°C and is generally completely melted at 32 to 35°C. However, such melting presents problems for storage and distribution in regions where ambient temperatures are high (e.g. 30 to 40°C).

As a result, much research effort has been directed towards the production of so-called temperature tolerant (or heat resistant) chocolate products. One approach is to replace the cocoa butter partially or completely with higher melting fats. Although such an approach does yield products which maintain their shape at relatively high temperatures, the fats melt less readily when eaten and leave an undesirable waxy mouthfeel. A second approach is to develop a lattice of sugar particles in the chocolate product which remains rigid when the fat starts to melt. Such a lattice of sugar particles may be developed by the addition of water to a chocolate mixture, including addition of water by means of water-in-oil emulsions. The resulting chocolate often has a gritty texture and there are processing difficulties due to a large increase in viscosity Examples of chocolate compositions with enhanced temperature resistance properties are disclosed in US 2010/0323067 A1.

It is an object of the present invention to provide an improved process for the production of a temperature tolerant chocolate tablet.

According to the present invention there is provided a process for the preparation of a chocolate tablet comprising co-milling a dry precursor comprising
(i) cocoa nibs and/or particulate cocoa butter and/or particulate cocoa butter equivalent/substitute;
(ii) a solid bulk sweetener; and
(iii) optionally dairy powder;
to obtain a powdered composition having a particle size of < 10µm (mean) and / or < 30µm (d90); and
compressing the powdered composition at a pressure of at least 7000kPa to obtain the chocolate tablet.

The resulting chocolate tablet is temperature tolerant. Without being bound by theory, the inventors propose that the compression of the powdered composition (a fine powder) at high pressure fuses the particles together to form a matrix. The use of a fine powder is considered critical for achieving temperature tolerance. In addition, a fine powder is also important from a taste perspective; larger particle sizes taste gritty for the consumer.

The process requires the precursor ingredients to be milled together (co-milled). Co-milling means that the components of the powdered composition all have the same particle size distribution. This is considered to be key for ensuring that the powdered composition "fuses" together to form the tablet. The sweetener is thought to be beneficial for adsorbing the cocoa butter during milling such that the low particle size is achieved. Moreover, it is well known that finely ground sucrose (a solid bulk sweetener) clumps over time. It is therefore common to employ a flow-aid to reduce clumping or to grind immediately before use. The inventors have discovered that such clumping does not take place if the bulk sweetener is milled together with the cocoa nibs (which comprise cocoa butter) or particulate cocoa butter (or CBE/CBS). Without being bound by theory, the inventors propose that the cocoa butter provides a moisture barrier around the sugar and thereby prevents clumping. The use of cocoa nibs/cocoa butter/CBE/ CBE is essential; cocoa powder does not generate the effect.

The inventors compared the dissolution of a blend comprising co-milled cocoa nibs, sugar and dairy powder with an analogous blend comprising cocoa powder (with additional cream powder to keep the fat level the same). The cocoa nibs blend dispersed in water in seconds (23 s) whereas the cocoa powder blend dispersed in minutes (3 minutes). The inventors consider the dissolution properties of the powdered composition to reflect the effectiveness of the powder in the process of the invention. The rate of dissolution of the powder is a function of both the particle size and the distribution of cocoa butter within the powder. The high rate of dissolution of the cocoa nibs blend indicates that, as a result of co-milling, the cocoa butter was well-dispersed. This is also important for achieving temperature tolerance. It is believed that the fat (i.e. cocoa butter) coats the milk proteins, preventing them from clumping together when added to water such that they are able to disperse. It is thought that this protein-fat interaction also prevents the fat from melting within the product matrix. The factors that make the powder quick to dissolve thus also make the powder suitable for fusing into a temperature tolerant tablet.

Example 1 of WO2009/068999 (Barry Callebaut AG) describes a process for producing a pillow shaped chocolate product by feeding a mixture of cocoa butter powder (mean particle size 120µm), natural cocoa powder (mean particle size 40µm) and refined sugar (mean particle size 60µm) through a roller compactor. The Example differs from the present invention in a number of ways. The components have a greater particle size than in the present invention, the sugar is milled on its own (the components are not co-milled) and the magnitude of the compression is not disclosed. The inventors propose that the differences in the process lead to a different product. In particular, it is noted that the powder mixture is kept at low temperature (15°C) throughout suggesting a lack of temperature tolerance.

In one embodiment the precursor is co-milled in a jet-mill (e.g. a fluid bed jet mill), an air classifier mill or a sugar mill. In a preferred embodiment the precursor is co-milled in a jet mill such as that supplied by Fluid Energy, Bethlehem PA.

It will be understood that the precursor and the subsequent powdered composition are solid at standard ambient temperature and pressure (25°C and 100kPa, SATP). Hence, the co-milling of the precursor can be considered to be dry grinding and the subsequent compression is carried out on a dry intermediate (the powdered composition). The process will typically be carried out at ambient temperature. In fact, it is a benefit of the process that no cooling is required.

The powdered composition is a free-flowing powder. In one embodiment the powdered composition has a particle size d90 < 30µm (30 micron). This means that at least 90% of the particles in the powder have a diameter less than 30µm. In further embodiments the powdered composition has a particle size d90 < 25µm or < 20µm. In a particular embodiment the powdered composition has a particle size d100 < 60µm and d50 < 10µm. In one embodiment the powdered composition has a mean (average) particle size of < 10µm.

Particle size can be determined using sieves or a laser diffraction particle size analyser, such as the MALVERN MASTERSIZER 2000, BECKMAN COULTER LS or SYMPATEC HELOS.

In one embodiment the powdered composition is compressed by means of a forming press. The forming press may be a hydraulic press, a mechanical press or a pneumatic press. In a particular embodiment the powdered composition is compressed by a hydraulic press such as those available from CARVER, INC (USA).

In one embodiment the compression of the powdered composition is not carried out by means of a roller compactor. The use of a roller compactor is considered impractical given the low particle size of the powdered composition. The gap between the rollers would need to be very small.

In one embodiment the powdered composition is compressed at a pressure of at least 8000, 10000, 20000, 30000, 40000, 50000, 60000, 70000, 80000, 90000, 100000, 110000, 120000 or 130000kPa. In one series of embodiments the powdered composition is compressed at a pressure of less than 150000, 120000, 100000, 80000, 60000, 40000 or 20000kPa. The greater the pressure that is applied the harder the resulting tablet. In a particular embodiment the powder is compressed at a pressure of from 40000 to 70000kPa or from 50000 to 60000kPa. Such pressures provide a tablet which is structurally strong but still soft enough for a consumer to bite into. The process is advantageous as compared to traditional processes which employ molten chocolate since fewer steps are required (no conching or tempering for example). Furthermore, the process itself provides a temperature tolerant chocolate without the need for additional ingredients (which might affect the flavour) to modify the properties.

In one embodiment the precursor comprises cocoa nibs and/ or particulate cocoa butter. Whilst cocoa butter equivalents (CBEs) and cocoa butter substitutes (CBSs) may be employed, they are generally less favourably received by consumers.

In one embodiment the precursor comprises cocoa nibs, bulk sweetener and dairy powder, to obtain a milk chocolate. In one embodiment the precursor comprises particulate cocoa butter, bulk sweetener and dairy powder to obtain a white chocolate. In one embodiment the precursor comprises cocoa nibs and bulk sweetener to obtain a dark chocolate.

In one series of embodiments the precursor comprises at least 20, 30, 40, 45 or 50wt% cocoa nibs and/or particulate cocoa butter and/or particulate cocoa butter equivalent/substitute. In one series of embodiments the precursor comprises less than 60, 50, 40, 35 or 30wt% cocoa nibs and/or particulate cocoa butter and/or particulate cocoa butter equivalent/substitute.

In one series of embodiments the precursor comprises at least 30, 40, 50 or 60wt% solid bulk sweetener. In one series of embodiments the precursor comprises less than 70, 65, 60, 50, 55, 50 or 40wt% bulk sweetener.

In one series of embodiments the precursor comprises at least 5, 10, 15, 20 or 25wt% dairy powder. In one series of embodiments the precursor comprises less than 30, 25, 20, 15 or 10wt% dairy powder.

In one embodiment the precursor consists of cocoa nibs and solid bulk sweetener. It will be understood that the resulting chocolate is a dark chocolate. In one such embodiment the powdered composition is the dark chocolate powder described in Example 13 of WO2012/009668; a powdered composition obtained by co-milling 46% cocoa nibs with 54% granulated sugar to a d90 particle size of 25µm (laser diffraction, Sympatec Helos, Sympatec GmbH, Claushal Zellerfeld, Germany).

In one embodiment the precursor consists of cocoa nibs, solid bulk sweetener and powdered dairy powder. The resulting chocolate is a milk chocolate. In one such embodiment the powdered composition is the milk chocolate powder described in Example 14 of WO2012/009668; a powdered composition obtained by co-milling 13.4% cocoa nibs, 59.9% granulated sugar, 10.5% sweet whey and 16.4% non-fat dry milk to a d90 particle size of 25µm (Sympatec Helos as above).

It is an advantage of the present invention that no emulsifier is required. Emulsifiers include lecithin derived from soya bean, safflower, sunflower, corn etc., fractionated lecithins enriched with either phosphatidyl choline, phosphatidyl ethanolamine, phosphatidyl inositol; emulsifiers derived from oats, mono- and diglycerides and their tartaric esters, monosodium phosphate derivatives of mono- and diglycerides of edible fats and oils, sorbitan monostearate, polyoxyethylene sorbitan monostearate, hydroxylated lecithin, synthetic phospholipids such as ammonium phosphatides, polyglycerol polyricinoleate (PGPR), lactylated fatty acid esters of glycerol and propylene glycol, polyglycerol esters of fatty acids, citric acid esters of fatty acids, propylene glycol mono- and diesters of fats and fatty acids. Emulsifiers tend to be available in liquid form and therefore would not be suitable for dry grinding of the precursor or compression of the (solid) powdered composition. In one embodiment no emulsifier is employed in the process. The resulting product is therefore emulsifier-free.

Suitable bulk sweeteners include sugars (e.g. sucrose, dextrose, glucose, glucose syrup solids, fructose, lactose, maltose or any combination thereof) and sugar substitutes such as sugar alcohols (e.g. erythritol, sorbitol, xylitol, mannitol, lactitol, isomalt, or any combination thereof). In certain embodiments the bulk sweetener comprises or consists of sucrose.

Suitable dairy powders include milk powder (including skimmed milk powder and full fat milk powder), whey powder, and mixtures thereof. In one embodiment the dairy powder is a milk powder.

In one embodiment the process additionally comprises a subsequent step of exposing the chocolate tablet to elevated temperature (above ambient temperature) in order to modify its appearance. For example, the tablet can be placed into an oven or exposed to a hot air gun.

In one series of embodiments the tablet is exposed to elevated temperature for at least 3, 5, 10, 20 or 30 seconds. In one series of embodiments the product is exposed to elevated temperature for less than 5, 4, 3, 2 or 1 minute. In a particular embodiment the product is exposed to elevated temperature for from 10 to 60 seconds.

In one embodiment the elevated temperature is at least 50, 55 or 60°C. In one embodiment the elevated temperature is less than 80, 70 or 60°C. In one embodiment the tablet is exposed to a hot air gun having an air temperature of at least 200 or 250°C for from 1 to 5 seconds.

In one embodiment compressing the powdered composition to form the tablet comprises compressing the powdered composition around a solid filling. A centre-filled product is obtained.

Suitable fillings include nuts, dried fruit, confectionery (e.g. toffee, hard boiled candies) and chocolate. It will be understood that the solid filling must be capable of withstanding the compression.

In one such embodiment, compressing the powdered composition around the solid filling comprises placing a first portion of the powdered composition in a press, placing the solid filling on top of the first portion of the powdered composition, placing a second portion of the powdered composition on the solid filling and closing the press to compress the powdered composition around the solid filling.

In a preferred embodiment the filling is a chocolate having a melting point of 37°C or less i.e. a traditional chocolate rather than a temperature tolerant chocolate. The resulting product therefore consists of the temperature tolerant tablet having a traditional chocolate therein. Even if the traditional chocolate filling melts, it remains enclosed in the temperature tolerant chocolate tablet and therefore the product as a whole is intact at elevated temperatures. Therefore the consumer has the opportunity to experience "traditional" chocolate and still enjoy the benefit of heat resistance.

There may be provided a temperature tolerant chocolate tablet producible by the process of the first aspect comprising
(i) cocoa nibs and/or cocoa butter and/or CBE/CBS;
(ii) bulk sweetener;
(iii) optionally dairy solids; and
(iv) optionally non-fat cocoa solids.

As used herein "temperature tolerant" in relation to a chocolate may mean that the composition retains its shape when exposed to elevated temperature (e.g. at least 40°C).

Alternatively a chocolate may be regarded as "temperature tolerant" if the peak load measured for the composition by a Stable Micro Systems TA.XT+ texture analyser is more than 500g, 1000g, 1500g or 2000g under the conditions defined hereinafter. Measurements using the TA.XT+ texture analyser are made by incubating the compositions (presented as 12mm deep moulded formats) at 40°C for 3 hours prior to analysis. Using a 12.8mm wide cylindrical probe, the texture analyser is programmed to penetrate the composition at a rate of 10mm/s recording the resistive force as a function of distance until a penetrative distance of 3mm is achieved. Conventional chocolate recipes give values of approximately 5 - 100 g.

The peak load measured for the product by a Stable Micro Systems TA.XT+ texture analyser may be more than 3000g or more than 4000g under the conditions defined previously.

The product of the second aspect is distinguishable from prior art products due to the particle size of the components therein. Particle size can be measured using conventional methods such as LASER diffraction. In addition, the particles are believed to be coated with fat due to the co-milling process as discussed above. Such coating could be analysed by microscopy.

It will be understood that a milk chocolate will comprise (i), (ii), (iii) and (iv); a dark chocolate will comprise (i), (ii) and (iv) i.e. no dairy solids; and a white chocolate will comprise (i), (ii) and (iii) i.e. no non-fat cocoa solids.

The chocolate tablet may be a milk chocolate which comprises or consists of from 8 to 15wt% cocoa butter (or cocoa butter equivalent/substitute), from 45 to 65wt% bulk sweetener; from 20 to 30wt% dairy solids and from 3 to 5wt% non-fat cocoa solids.

The chocolate tablet may be a dark chocolate which comprises or consists of from 25 to 40wt% cocoa butter (or cocoa butter equivalent/substitute), from 45 to 65wt% bulk sweetener; 0wt% dairy solids and from 10 to 14wt% non-fat cocoa solids.

The chocolate tablet may be emulsifier free.

The chocolate tablet may have a solid filling therein. Some suitable solids fillings are listed above. The ratio of tablet to filling may be from 35:65 to from 65:35 or from 40:60 to 60:40.

Preferably, the filling is a chocolate having a melting point of 37°C or less (i.e. a traditional chocolate). The temperature tolerant chocolate tablet protects the filling from the effects of elevated temperature.

The chocolate tablet may be cylindrical. This shape is easily obtained from a cylindrical press. Alternatively, the chocolate tablet may be spherical, ovoid, cubic, cuboid, disc-shaped, star shaped, lozenge shaped or heart shaped.

The process of the first aspect has been found to be particularly suitable for producing smaller, bite-size pieces.

The chocolate tablet may have a maximum diameter of less than 50, 40, or 30mm. The chocolate tablet may have a maximum diameter of at least 10, 20 or 30mm.

The chocolate tablet (including a filling if present) may have a mass of less than 8, 6, 5, 4, 3 or 2g. The tablet may have a mass of at least 1, 2, 3, 4 or 5g.

The chocolate tablet (including filling if present) may have a density of at least 1.2, 1.3 or 1.4g/cm³.

There may be provided a chocolate product comprising a filling sealed within a shell, the filling comprising a first chocolate composition and the shell comprising a second chocolate composition, wherein the first chocolate composition has a melting point of 37°C or less and the second chocolate composition has a melting point greater than 37°C.

It will be understood that the first chocolate composition is a conventional chocolate and therefore suffers from the usual problems of storage and distribution in hot climates. The second chocolate composition is capable of withstanding higher temperatures; it is a temperature tolerant chocolate. Even if the first chocolate composition melts, it remains enclosed in the second chocolate composition and therefore the product as a whole is intact at elevated temperatures. Therefore the consumer has the opportunity to experience "traditional" chocolate and still enjoy the benefit of heat resistance.

The first chocolate composition may have a melting point of less than 37, 36, 35, 34, 33 or 32°C. The second composition may have a melting point of at least 40, 45, 50, 55 or 60°C.

The melting point of the first and second chocolate compositions should be determined at standard ambient pressure (100kPa). The melting point is the temperature at which the chocolate composition changes from a solid to a liquid. If the phase change is not sharp, then the average temperature should be taken. For example, if the chocolate starts to melt at 28°C but only becomes fully liquid at 35°C, the melting point is considered to be 31.5°C (i.e. 63/2).

The product comprises a shell and a filling. The filling may constitute at least 10, 15, 20, 25, 30, 40, 45, 50, 55 or 60wt% of the product. The shell may constitute at least 40, 45, 50, 55, 60, 65, 70, 75, 80, 85 or 90wt% of the product. The ratio of filling to shell may be from 40:60 to 60:40.

The shell may have an average thickness of at least 0.5, 1, 2, 3, 5, 7 or 10mm. The thicker the shell, the stronger and more resistant to damage it will be. The shell may have an average thickness of less than 20, 15, 10, 5, 3, 2 or 1mm. The thinner the shell, the less noticeable it will be to the consumer. The shell may be thick enough to withstand damage even at elevated temperature yet soft enough to be easy to bite into.

The product may have a length (its longest dimension) of less than 10, 9, 8, 7, 6, 5, 4, 3, 2 or 1cm. The process of compressing a powder around the filling to form the shell is especially beneficial for producing small items.

The product (shell and filling) may have a density of at least 1.2, 1.3 or 1.4g/cm³.

The filling may consist of the first chocolate composition.

The shell may consist of the second chocolate composition.

It will be understood that the process of the first aspect may be employed to prepare the product. However, the product can also be obtained by other methods.

There may be provided a process for the preparation of a chocolate product comprising providing a filling comprising a first chocolate composition, the first chocolate composition having a melting point of 37°C or less; and
sealing the filling within a shell of a second chocolate composition,
wherein the second chocolate composition has a melting point greater than 37°C.

Sealing the filling within the shell may comprise co-depositing the first and second chocolate compositions so that the second chocolate composition encloses the first chocolate composition. This process is commonly known as one-shot depositing.

Sealing the filling within the shell may comprise shell moulding. For example, sealing the filling within the shell may comprise
forming the second chocolate composition into an open shell;
depositing the first chocolate composition into the open shell; and
applying a further quantity of the second chocolate composition to the open shell to enclose the filling.

The term 'chocolate' in the context of the present invention is not restricted by the various definitions of chocolate provided by government and regulatory bodies. A 'chocolate' may be a dark chocolate, a milk chocolate or a white chocolate.
Chocolate comprises at least one fat. The fat may be cocoa butter, butterfat, a cocoa butter equivalent (CBE), a cocoa butter substitute (CBS) or any combination of the above. In a particular embodiment, the chocolate comprises cocoa butter.
CBEs are defined in Directive 2000/36/EC. Suitable CBEs include illipe, Borneo tallow, tengkawang, palm oil, sal, shea, kokum gurgi and mango kernel. CBE's are usually used in combination with cocoa butter. In one embodiment, the chocolate comprises no more than 5wt% CBE's.
Chocolate may comprise a cocoa butter substitute (CBS) (sometimes known as a cocoa butter replacer, CBR) in place of some or all of the cocoa butter. Such chocolate materials are sometimes known as compound chocolate. Suitable CBS's include CBS laurics and CBS non-laurics. CBS laurics are short-chain fatty acid glycerides. Their physical properties vary but they all have triglyceride configurations that make them compatible with cocoa butter. Suitable CBS's include those based on palm kernel oil and coconut oil. CBS non-laurics consist of fractions obtained from hydrogenated oils. The oils are selectively hydrogenated with the formation of trans acids, which increases the solid phase of the fat. Suitable sources for CBS nonlaurics include soya, cottonseed, peanut, rapeseed and corn (maize) oil.

Embodiments of the invention will now be described by way of example.

### Example 1

Cocoa nibs, sugar and dairy powders were milled in a fluid bed jet mill in a single dry process to produce a fine powder having a particle size of d90 <25 micron (d100< 60um, d50<10um) as measured by laser diffraction (Beckman Coulter LS particle size analyser, Fraunhofer analysis model). For white chocolate solid particulate cocoa butter can be substituted for the cocoa nibs. For a dark chocolate the dairy powder can be omitted. Suitable recipes are provided below.

| | Dark chocolate | Milk chocolate 1 | Milk chocolate 2 |
|---|---|---|---|
| Sucrose | 56.0 | 59.6 | 59.3 |
| Cocoa nibs | 22 | 6.7 | 8.5 |
| Cocoa butter | 22 | 6.7 | 8.5 |
| Milk powder | 0 | 27.0 | 23.7 |

5g of the powder was placed in a cylindrical press form (30mm in diameter). A hydraulic press (Carver, Inc.) was employed to compress the powder into a flat aspect cylinder (3cm in diameter and 0.5cm high, hence a volume of 3.53cm³). This corresponds to a density of 1.42g/cm³ (5g/3.53cm³).

The sample had a light tan colour (similar to that of the uncompressed powder) but was darkened to a more traditional chocolate colour by brief exposure to heat. A commercial heat gun was used to darken the surface of the product (few seconds) and the air temperature was ∼500°F (∼260°C). Oven temperatures were up to 60°C and the samples were left for weeks with no issues of the surface deformation (visual inspection) or melting (visual inspection). Samples remained in the oven at 40°C for 6 months and were still stable (snapped when hand-tested after cooling back to room temperature).

Compression pressures from 1000 to 20000psi (6895-137895kPa) were found to be successful with preferred values being approximately 8000psi (55158kPa). Lower values resulted in a weaker product which fractured more easily that those prepared at higher values. High values resulted in a product which was difficult to bite but could still be sucked.

The resulting product resisted deformation up to 60°C (hand-held testing by trying to snap/break the piece after it had returned to room temperature).

### Example 2

Using the same press and powder as example 1, 1g of milk chocolate powder was placed into the cylindrical form. A small piece (2.5g) of a conventional milk chocolate (CADBURY DAIRY MILK BUTTONS) was placed on top of the layer of powder. A further layer of chocolate powder (1-1.5g) was then added to completely cover the conventional chocolate piece. Hence the product is 44-50wt% shell and 50-56wt% filling. The hydraulic press was then employed to compress the powder and completely seal the conventional chocolate inside the shell of powder. The sample was briefly exposed to heat to darken.

The product has an interesting dual texture since the filling melts and can be made to flow if the shell is squeezed between thumb and forefinger. The shell has an average thickness of 1.5-2mm. The product has a height (thickness) of ∼5-7mm.

The resulting product resisted deformation up to 60°C (hand-held testing by trying to snap/break the piece after it had returned to room temperature).

### Dissolution test

The behaviour of blends based on cocoa nibs and cocoa powder was investigated. The blends were produced by co-milling the ingredients listed in the table below in a jet mill. Since cocoa powder has a lower fat level than cocoa nibs, cream powder was added to make the fat contents equivalent.

| Ingredients (wt%) | Cocoa nibs blend | Cocoa powder blend |
|---|---|---|
| Sugar | 59.6 | 59.6 |
| Cocoa nibs | 13.4 | 0 |
| Cocoa powder (10-12% fat) | 0 | 7.5 |
| Sweet whey powder | 10.5 | 10.5 |
| Skimmed milk powder | 16.5 | 7.5 |
| Cream powder | 0 | 14.9 |
| TOTAL | 100 | 100 |

200ml of water was heated to 170°F (76.7°C) in a 300ml beaker. 10g of the sample powder was added and a timer was started to measure the time taken for the blend to dissolve. Each sample was tested twice.

| | % fat | Time 1 | Time 2 | Mean | Comments |
|---|---|---|---|---|---|
| Cocoa nibs blend | 6.7 | 23s | 26s | 24.5s | Sinks in very quickly without clumping |
| Cocoa powder blend | 6.7 | 3:07 minutes | 3:00 minutes | 3:04 minutes | Sinks in quickly at first, but it is slow to get ALL of the powder in solution. Eventually it all hydrates. |

It can be seen that the cocoa nibs blend dissolved much more quickly than the cocoa powder blend; seconds rather than minutes.

## Claims

1. A process for the preparation of a chocolate tablet comprising co-milling a dry precursor comprising
(i) cocoa nibs and/or particulate cocoa butter and/or particulate cocoa butter equivalent/substitute;
(ii) a solid bulk sweetener; and
(iii) optionally dairy powder;
to obtain a powdered composition having a particle size of < 10µm (mean) and / or < 30µm (d90); and
compressing the powdered composition at a pressure of at least 7000kPa to obtain the chocolate tablet.

2. The process of claim 1, wherein the powdered composition has a particle size d100 < 60µm and d50 < 10µm.

3. The process of claim 1 or 2, wherein the powdered composition is compressed by means of a forming press.

4. The process of any one of the preceding claims, wherein compression of the powdered composition is not carried out by means of a roller compactor.

5. The process of any one of the preceding claims, wherein the powdered composition is compressed at a pressure of from 40000 to 70000kPa.

6. The process of any one of the preceding claims, wherein the precursor comprises cocoa nibs and/ or particulate cocoa butter.

7. The process of any one of the preceding claims, wherein the precursor comprises cocoa nibs, bulk sweetener and dairy powder.

8. The process of any one of claims 1 to 6, wherein the precursor consists of cocoa nibs and solid bulk sweetener.

9. The process of any one of the preceding claims, wherein the process additionally comprises a subsequent step of exposing the chocolate tablet to elevated temperature in order to modify its appearance.

10. The process of any one of the preceding claims, wherein compressing the powdered composition to form the tablet comprises compressing the powdered composition around a solid filling.

11. The process of claim 10, wherein compressing the powdered composition around the solid filling comprises placing a first portion of the powdered composition in a press; placing the solid filling on top of the first portion of the powdered composition; placing a second portion of the powdered composition on the solid filling; and closing the press.

12. The process of claim 10 or 11, wherein the solid filling is a chocolate having a melting point of 37°C or less.

## Patentansprüche

1. Verfahren für die Herstellung einer Schokoladetafel, umfassend das gleichzeitige Mahlen eines trockenen Vorläufers umfassend
(i) Kakaonibs und/oder teilchenförmige Kakaobutter und/oder teilchenförmiges Kakaobutteräquivalent/teilchenförmigen Kakaobutterersatz;
(ii) ein festes Massensüßungsmittel; und
(iii) wahlweise Milchproduktpulver;
um eine pulverförmige Zusammensetzung zu erhalten, die eine Teilchengröße von < 10 µm (Mittelwert) und/oder < 30 µm (d90) aufweist; und
das Komprimieren der pulverförmigen Zusammensetzung bei einem Druck von mindestens 7000 kPa, um die Schokoladetafel zu erhalten.

2. Verfahren nach Anspruch 1, wobei die pulverförmige Zusammensetzung eine Teilchengröße d100 < 60 µm und d50 < 10 µm aufweist.

3. Verfahren nach Anspruch 1 oder 2, wobei die pulverförmige Zusammensetzung durch eine Formpresse komprimiert wird.

4. Verfahren nach einem der vorhergehenden Ansprüche, wobei die Kompression der pulverförmigen Zusammensetzung nicht durch einen Walzenkompaktor ausgeführt wird.

5. Verfahren nach einem der vorhergehenden Ansprüche, wobei die pulverförmige Zusammensetzung bei einem Druck von 40000 bis 70000 kPa komprimiert wird.

6. Verfahren nach einem der vorhergehenden Ansprüche, wobei der Vorläufer Kakaonibs und/oder teilchenförmige Kakaobutter umfasst.

7. Verfahren nach einem der vorhergehenden Ansprüche, wobei der Vorläufer Kakaonibs, Massensüßungsmittel und Milchproduktpulver umfasst.

8. Verfahren nach einem der Ansprüche 1 bis 6, wobei der Vorläufer aus Kakaonibs und festem Massensüßungsmittel besteht.

9. Verfahren nach einem der vorhergehenden Ansprüche, wobei das Verfahren zusätzlich einen darauffolgenden Schritt des Aussetzens der Schokoladetafel erhöhter Temperatur umfasst, um ihr Aussehen zu modifizieren.

10. Verfahren nach einem der vorhergehenden Ansprüche, wobei das Komprimieren der pulverförmigen Zusammensetzung zum Bilden der Tafel das Komprimieren der pulverförmigen Zusammensetzung um eine feste Füllung umfasst.

11. Verfahren nach Anspruch 10, wobei das Komprimieren der pulverförmigen Zusammensetzung um die feste Füllung das Positionieren eines ersten Teils der pulverförmigen Zusammensetzung in eine Presse, das Positionieren der festen Füllung auf den ersten Teil der pulverförmigen Zusammensetzung, das Positionieren eines zweiten Teils der pulverförmigen Zusammensetzung auf die feste Füllung und das Schließen der Presse umfasst.

12. Verfahren nach Anspruch 10 oder 11, wobei die feste Füllung eine Schokolade ist, die einen Schmelzpunkt von 37 °C oder weniger aufweist.

## Revendications

1. Procédé de préparation d'une tablette de chocolat comprenant le co-broyage d'un précurseur sec comprenant
(i) des éclats de cacao et/ou du beurre de cacao sous forme de particules et/ou un équivalent/substitut du beurre de cacao sous forme de particules;
(ii) un édulcorant solide en vrac; et
(iii) éventuellement une poudre d'origine laitière;
pour obtenir une composition en poudre présentant une taille de particule < 10 µm (moyenne) et/ou < 30 µm (d₉₀); et
la compression de la composition en poudre à une pression d'au moins 7 000 kPa pour obtenir la tablette de chocolat.

2. Procédé selon la revendication 1, la composition en poudre présentant une taille de particule d₁₀₀ < 60 • m et d₅₀ < 10 • m.

3. Procédé selon la revendication 1 ou 2, la composition en poudre étant comprimée à l'aide d'une presse de mise en forme.

4. Procédé selon l'une quelconque des revendications précédentes, la compression de la composition en poudre n'étant pas conduite à l'aide d'un compacteur à rouleau.

5. Procédé selon l'une quelconque des revendications précédentes, la composition en poudre étant comprimée à une pression de 40 000 à 70 000 kPa.

6. Procédé selon l'une quelconque des revendications précédentes, le précurseur comprenant des éclats de cacao et/ou du beurre de cacao sous forme de particules.

7. Procédé selon l'une quelconque des revendications précédentes, le précurseur comprenant des éclats de cacao, un édulcorant en vrac et une poudre d'origine laitière.

8. Procédé selon l'une quelconque des revendications 1 à 6, le précurseur étant constitué d'éclats de cacao et d'édulcorant solide en vrac.

9. Procédé selon l'une quelconque des revendications précédentes, le procédé comprenant additionnellement une étape ultérieure d'exposition de la tablette de chocolat à une température élevée afin de modifier son apparence.

10. Procédé selon l'une quelconque des revendications précédentes, la compression de la composition en poudre pour former la tablette comprenant la compression de la composition en poudre autour d'une garniture solide.

11. Procédé selon la revendication 10, la compression de la composition en poudre autour de la garniture solide comprenant la mise en place d'une première partie de la composition en poudre dans une presse; la mise en place de la garniture solide sur le dessus de la première partie de la composition en poudre; la mise en place d'une seconde partie de la composition en poudre sur la garniture solide; et la fermeture de la presse.

12. Procédé selon la revendication 10 ou 11, la garniture solide étant un chocolat ayant un point de fusion de 37°C ou moins.
